# EUROPÄISCHE PATENTSCHRIFT

(11) **EP 1 010 293 B1**
(45) Veröffentlichungstag und Bekanntmachung des Hinweises auf die Patenterteilung: **16.02.2005**
(21) Anmeldenummer: 98948806.9
(22) Anmeldetag: 14.08.1998
(51) Int. Cl.: H04L 12/00

(54) **VERFAHREN UND SCHALTUNGSANORDNUNG ZUM ÜBERTRAGEN VON NACHRICHTENEINHEITEN IN NACHRICHTENSTRÖMEN UNTERSCHIEDLICHER PRIORITÄT**
METHOD AND CIRCUIT FOR TRANSMITTING MESSAGE UNITS IN MESSAGE STREAMS WITH DIFFERENT PRIORITY
PROCEDE ET CIRCUIT POUR TRANSMETTRE DES UNITES DE MESSAGES DANS DES FLUX DE MESSAGES DE DIFFERENTES PRIORITES

(30) Priorität: 29.08.1997 DE 19737852
(43) Veröffentlichungstag der Anmeldung: 21.06.2000
(73) Patentinhaber: SIEMENS AKTIENGESELLSCHAFT, 80333 München (DE)
(72) Erfinder: BRIEM, Uwe, D-82216 Maisach (DE); WALLMEIER, Eugen, D-82223 Eichenau (DE)
(86) Internationale Anmeldenummer: PCT/DE1998/002386
(87) Internationale Veröffentlichungsnummer: WO 1999/012311

(56) Entgegenhaltungen:
- US-A- 5 268 900
- HLUCHYJ M G ET AL: "QUEUEING DISCIPLINES FOR INTEGRATED FAST PACKET NETWORKS" DISCOVERING A NEW WORLD OF COMMUNICATIONS, CHICAGO, JUNE 14 - 18, 1992, Bd. 2, 14. Juni 1992, Seiten 990-996, XP000326820 INSTITUTE OF ELECTRICAL AND ELECTRONICS ENGINEERS
- SRIRAM K: "METHODOLOGIES FOR BANDWIDTH ALLOCATION, TRANSMISSION SCHEDULING, AND CONGESTION AVOIDANCE IN BROADBAND ATM NETWORKS" COMPUTER NETWORKS AND ISDN SYSTEMS, Bd. 26, Nr. 1, 1. September 1993, Seiten 43-59, XP000390600

## Beschreibung

Die Erfindung betrifft ein Verfahren und eine Schaltungsanordnung gemäß Oberbegriff des Patentanspruches 1 bzw. 4. Ein derartiges Verfahren und eine derartige Schaltungsanordnung sind bereits durch die nicht vorveröffentlichte Patentanmeldung 197 05 789.6-31 bekannt.

Mit diesem Verfahren und dieser Schaltungsanordnung soll das Problem gelöst werden, wie die Übertagungsleitungen eines ATM-Systems und die diesen jeweils zugeordneten Pufferspeicher effizient ausgelastet werden können. Hierzu ist vorgesehen, daß bei einem einen bestimmten Füllgrad aufweisenden Pufferspeicher mit dem Eintreffen einer einer virtuellen Verbindung relativ hoher Priorität zugehörigen Nachrichtenzelle auf der jeweiligen Übertragungsleitung von in dem Pufferspeicher gerade gespeicherten Nachrichtenzellen einer ausgewählten virtuellen Verbindung niedriger Priorität eine oder mehrere dieser Nachrichtenzellen in Abhängigkeit von der Anzahl der für diese virtuelle Verbindung niedriger Priorität gespeicherten Nachrichtenzellen verworfen werden.

In der US-Patentschrift 5,268,900 ist ein Verfahren zur Übertragung von Nachrichteneinheiten, die Nachrichtenströmen mit unterschiedlicher Priorität und Verkehrsklasse zugehörig sind, gemeinsam über einen übertragungskanal offenbart, bei dem
- die dem jeweiligen Nachrichtenstrom zugehörigen Nachrichteneinheiten jeweils eine prioritäts- und verkehrsklassenindividuelle Warteschlange durchlaufen,
- die Warteschlangen entsprechend ihrer Verkehrsklassen zu Warteschlangen-Gruppen zusammengefaßt werden,
- die Warteschlangen-Gruppen jeweils von einer gesonderten Warteschlangen-Steuereinrichtung her derart gesteuert werden, daß Warteschlangen zu verkehrsklassen-individuellen Partner-Warteschlangen-Gruppen zusammengefaßt sind, sofern sie bei gleicher Verkehrklasse unterschiedliche Prioritäten aufweisen.

In K. Sriram, "Methodologies for bandwidth allocation, transmission scheduling, and congestion avoidance in broadband ATM networks", Computer Networks and ISDN Systems 26, 1993, S. 43-59 ist eine Bedienstrategie für Nachrichtenströme unterschiedlicher Priorität über einen gemeinsamen Übertragungskanal offenbart, bei dem mehrere Warteschlangen entsprechend ihrer Priorität derart gesteuert werden, daß eine Warteschlange gegenüber den verbleibenden Warteschlangen exklusiv priorisiert wird, indem lediglich für den Fall, daß von dieser Warteschlange mit höchster Priorität keine Nachrichteneinheiten übertragen werden können, eine Übertragung von Nachrichteneinheiten aus einer der verbleibenden Nachrichteneinheiten zugelassen wird.

Demgegenüber ist es nun Aufgabe der vorliegenden Erfindung, einen Weg zu zeigen, wie ein Verfahren und eine Schaltungsanordnung gemäß Oberbegriff des Patentanspruches 1 bzw. 4 ausgebildet werden können, unter Berücksichtigung von Prioritäten für die Nachrichtenströme zusätzlich Durchsatzgarantien zu gewährleisten.

Gelöst wird diese Aufgabe bei einem Verfahren und einer Schaltungsanordnung gemäß Oberbegriff des Patentanspruches 1 bzw. 4 durch die in diesen Patentansprüchen angegebenen Verfahrensmerkmale bzw. schaltungstechnischen Merkmale.
Die Erfindung bringt dabei den Vorteil mit sich, daß mit einem relativ geringen Steuerungsaufwand bzw. mit einem relativ geringen schaltungstechnischen Aufwand folgende Leistungsmerkmale realisiert werden können:
1. Individuelle minimale Bitraten werden für jeden Nachrichtenzellenstrom unabhängig von dessen Priorität garantiert.
2. Eine über die Summe der Durchsatzgarantien hinausgehende Bitrate wird strikt nach der Priorität der Nachrichtenzellenströme vergeben, d.h. Zuteilung erfolgt erst an die Nachrichtenzellenströme hoher Priorität (1), falls diese nichts zu übertragen haben, dann erst an die Nachrichtenzellenströme niedrigerer Priorität (2).
3. Falls die minimale Bitrate von einem der Nachrichtenzellenströme nicht voll genutzt wird, so kann diese Bitrate anderen Nachrichtenzellenströmen verfügbar gemacht werden.

Vorteilhafte Ausgestaltungen des Verfahrens gemäß der vorliegenden Erfindung ergeben sich aus den auf den Patentanspruch 1 rückbezogenen Unteransprüchen.

Im folgenden wird nun die vorliegenden Erfindung unter Bezugnahme auf eine Zeichnung näher beschrieben.

In der Zeichnung ist als Beispiel eine Leitungseinrichtung LE schematisch dargestellt, die zwischen zwei Übertragungsleitungsabschnitte L1 und L2 eines nach einem asynchronen Transfermodus arbeitenden ATM-Systems eingefügt ist. Dabei sind lediglich diejenigen Schaltungselemente der Leitungseinrichtung LE aufgezeigt, die für das Verständnis der vorliegenden Erfindung erforderlich sind. Darüber hinaus ist diese Leitungseinrichtung stellvertretend für weitere in Übertragungsleitungsabschnitte des ATM-Systems eingefügte Leitungseinrichtungen wiedergegeben.

Im übrigen wird im folgenden auf das allgemeine ATM-Prinzip nicht näher eingegangen, da dies hinlänglich bekannt ist.

Auf dem Übertragungsleitungsabschnitt L1 treten Nachrichtenzellen ("cells") auf, die in bekannter Weise neben einem Informationsteil ("user part") über einen externen Zellenkopf ("header") verfügen. Dabei sind in einem solchen externen Zellenkopf unter anderem Angaben bezüglich der Zugehörigkeit zu einer bestimmten virtuellen Verbindung enthalten. Bei einer virtuellen Verbindung kann es sich entweder um eine virtuelle Kanalverbindung (Einzelverbindung) oder um eine virtuelle Pfadverbindung (Bündel mehrerer Einzelverbindungen) handeln. Einer virtuellen Kanalverbindung ist dabei eine virtuelle Kanalnummer VCI ("virtual canal identifier"), einer virtuellen Pfadverbindung dagegen eine virtuelle Pfadnummer VPI ("virtual path identifier") in dem externen Zellenkopf der jeweiligen Nachrichtenzelle zugeordnet. Im Falle einer virtuellen Pfadverbindung ist in dem externen Zellenkopf zusätzlich eine virtuelle Kanalnummer VCI angegeben, um die einzelnen, innerhalb der virtuellen Pfadverbindung geführten virtuellen Kanalverbindungen identifizieren zu können.

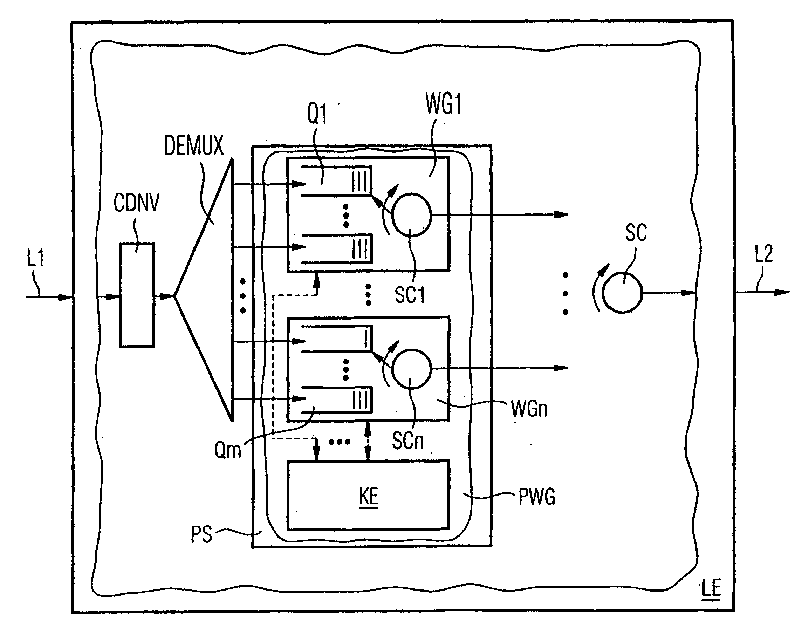

Den Eingang der Leitungseinrichtung LE (FIG 1) bildet eine Konvertierungseinrichtung CONV. Diese setzt jeder auf dem Übertragungsleitungsabschnitt L1 auftretenden Nachrichtenzelle einen internen Zellenkopf ("header") voran, um die jeweilige Nachrichtenzelle innerhalb des ATM-Systems weiterleiten zu können. Dieser interne Zellenkopf wird nach Maßgabe des Inhaltes des in den Nachrichtenzellen jeweils enthaltenen externen Zellenkopfes gebildet. Dabei wird unter anderem nach Maßgabe der in dem jeweiligen externen Zellenkopf enthaltenen VCI bzw. VPI/VCI eine von m Warteschlangen-Identifizierungen QID ("queue identifications") statistisch zugeordnet. Die jeweilige Warteschlangen-Identifizierung QID bewirkt gegenüber der zugeordneten VCI bzw VPI/VCI eine Adressenreduktion und ist in den zugehörigen internen Zellenkopf aufgenommen.

Die auf diese Weise um einen internen Zellenkopf erweiterten Nachrichtenzellen werden nacheinander einer Demultiplex-Einrichtung DEMUX zugeführt, welche über m Demultiplex-Ausgänge mit einem Pufferspeicher PS verbunden ist. Die Demultiplex-Ausgänge sind den genannten Warteschlangen-Identifizierungen QID individuell zugeordnet.

Der Pufferspeicher PS weist eine Vielzahl von Speicherplätzen auf, aus denen maximal m logische Warteschlangen gebildet werden können, wie im folgenden noch näher erläutert wird.
Diese logischen Warteschlangen, die in der Zeichnung mit Q1 bis Qm bezeichnet sind, werden von der Demultiplex-Einrichtung DEMUX her mit Hilfe der in den empfangenen Nachrichtenzellen enthaltenen Warteschlangen-Identifizierungen QID individuell angesteuert. Auf eine solche Ansteuerung einer logischen Warteschlange hin wird in diese die mit der gerade in Frage kommenden Warteschlangen-Identifizierung versehene Nachrichtenzelle übernommen. Die einzelnen logischen Warteschlangen bilden dabei jeweils einen "FIFO"-Speicher ("First-In-First-Out"-Speicher), der eine Mehrzahl von Nachrichtenzellen gleichzeitig zwischenspeichern kann.

Die logischen Warteschlangen Q1 bis Qm werden zu Warteschlangen-Gruppen zusammengefaßt, beispielsweise entsprechend der für die virtuellen Verbindungen festgelegten Prioritäten.
Diese Warteschlangen-Gruppen, die in der Zeichnung mit WG1 bis WGn bezeichnet sind, sind beispielsweise jeweils einer von n Prioritäten zugeordnet und werden von einer Warteschlangen-Steuereinrichtung SC angesteuert. Da jedoch diese Warteschlangen-Steuereinrichtung SC nicht Gegenstand der vorliegenden Erfindung ist, wird hierauf nicht näher eingegangen.

Jede dieser Warteschlangen-Gruppen wird dabei von einer gesonderten Warteschlangen-Steuereinrichtung SCx mit n=1,...,n ("Scheduler") verwaltet. Dabei werden die zu einer Warteschlangen-Gruppe X zusammengefaßten warteschlangen im Rahmen einer vorgegebenen Abfertigungsdisziplin ("Cell Scheduling") von der zugehörigen Warteschlangen-Steuereinrichtung SCx angesteuert. Hierbei wird in einem solchen Steuerzyklus aus jeder logischen Warteschlange eine Nachrichtenzelle entnommen und in Richtung des in der Zeichnung dargestellten Übertragungsleitungsabschnittes L2 weitergeleitet.

Darüber hinaus werden bei dem Ausführungsbeispiel eine Mehrzahl von Warteschlangen-Gruppen jeweils zu einer Partner-Warteschlangen-Gruppe zusammengefaßt. Als Beispiel ist dabei in der Zeichnung angedeutet, daß die Warteschlangen-Gruppen WG1 bis WGn gemeinsam eine solche Partner-Warteschlangen-Gruppe PWG bilden. Im allgemeinen besitzen dabei die einer Partner-Warteschlangen-Gruppe zugeordneten Warteschlangen-Gruppen unterschiedliche Prioritäten, was jedoch keine Forderung darstellt.

Jede Warteschlangen-Gruppe (WG1 bis WGn) einer Partner-Warteschlangen-Gruppe (PWG) wird von einer in der Zeichnung nicht näher dargestellten übergeordneten Steuereinrichtung angestoßen, Nachrichtenzellen mit einer Bitrate (Zellrate) Rx in Richtung auf den Übertragungsabschnitt L2 zu übertragen. Mindestens zwei dieser Bitraten Rx sind ungleich Null.

Weiterhin sind den zu einer Partner-Warteschlangen-Gruppe (PWG) zugehörigen Warteschlangen-Gruppen (WG1 bis WGn) gemeinsam eine Kontrolleinrichtung KE zugeordnet, wobei zwischen dieser und den Warteschlangen-Gruppen jeweils bidirektionale Kommunikationsverbindungen für noch zu erwähnende Steuerzwecke bestehen, wie dies in der Zeichnung durch unterbrochene Verbindungslinie angedeutet ist.

Aufgabe der Kontrolleinrichtung ist es, für den Fall, daß eine Warteschlangen-Gruppe momentan keine Nachrichtenzelle senden kann, obwohl diese Warteschlangen-Gruppe von einer in der Zeichnung nicht näher dargestellten übergeordneten Einrichtung dazu angestoßen wurde, wird von der Kontrolleinrichtung KE diese Übertragungsmöglichkeit entsprechend einem vorgegebenen Prioritätsalgorithmus einer anderen Warteschlangen-Gruppe innerhalb der Partner-Warteschlangen-Gruppe übergeben. Im übrigen kann der Fall, daß eine Warteschlangen-Gruppe momentan keine Nachrichtenzelle senden kann, dadurch bedingt sein, daß in den dieser Warteschlangen-Gruppe zugeordneten Warteschlangen keine Nachrichtenzellen mehr gespeichert sind oder daß nach der Abfertigungsdisziplin ("Scheduling") der der betreffenden Warteschlangen-Gruppe zugeordneten Warteschlangen-Steuereinrichtung (SC1 .... SCn) es nicht erlaubt ist, eine Nachrichtenzelle zu übertragen, weil sonst beispielsweise eine maximal erlaubte Spitzenbitrate eines Nachrichtenzellenstromes überschritten würde.

Im folgenden wird gezeigt, daß mit dem erfindungsgemäßen Verfahren bzw. der erfindungsgemäßen, in der Zeichnung dargestellten Leitungseinrichtung LE als Beispiel folgende Übertragungseigenschaften realisiert werden können:
1. Individuelle minimale Bitraten werden für jeden Nachrichtenzellenstrom unabhängig von dessen Priorität garantiert.
2. Eine über die Summe der Durchsatzgarantien hinausgehende Bitrate wird strikt nach der Priorität der Nachrichtenzellenströme vergeben, d.h. Zuteilung erfolgt erst an die Nachrichtenzellenströme höher Priorität (1), falls diese nichts zu übertragen haben, dann erst an die Nachrichtenzellenströme niedrigerer Priorität (2).
3. Falls die minimale Bitrate von einem der Nachrichtenzellenströme nicht voll genutzt wird, so kann diese Bitrate anderen Nachrichtenzellenströmen verfügbar gemacht werden, die auch einer anderen Warteschlangen-Gruppe zugeordnet sein können.

Für die Veranschaulichung dieses Beispiels seien folgende Annahme getroffen:
1. Es sind lediglich zwei Warteschlangen-Gruppen vorhanden, wobei die Warteschlangen-Gruppe WG1 hochprior, die Warteschlangen-Gruppe WG2 dagegen niederprior sein möge.
2. R1 = 50 Mbit/s sei größer als die Summe der Durchsatzgarantien der hochprioren Nachrichtenzellenzellenstrome.
3. R2 = 20 Mbit/s sei identisch mit der Summe der Durchsatzgarantien der niederprioren Nachrichtenzellenströme
4. Beide Warteschlangen-Gruppen WG1 und WG2 arbeiten nach dem "Weighted Fair Queueing (WFQ)"-verfahren.
5. Falls WG1 keine Nachrichtenzellenmehr gepuffert hat, wird WG2 die Möglichkeit gegeben eine Nachrichtenzell zu übertragen und umgekehrt.

Hieraus ergibt sich folgendes Verhalten. Die resultierende Ankunftsrate aller hochprioren bzw. niederprioren Nachrichtenzellenströme zusammen sei dabei mit A1 bzw. A2 bezeichnet:
1.A1 > R1, A2 > R2: hochpriore Zellenströme erhalten zusammen R1 = 50 Mb/s, niederpriore R2 = 20 Mb/s
2.A1 > R1, A2 < R2: hochpriore Zellenströme erhalten Zusammen R1 + (R2-A2), niederpriore A2
3.A1 < R1, A2 > R2: hochpriore Zellenströme erhalten zusammen A1, niederpriore R2 + (R1-A1)
4.A1 < R1, A2 < R2: hochpriore Zellenströme erhalten zusammen A1, niederpriore A2

Vorstehend wurde die vorliegende Erfindung am Beispiel einer Leitungseinrichtung eines ATM-Systems beschrieben. Diese Erfindung ist jedoch nicht auf derartige Systeme beschränkt. Vielmehr ist sie allgemein in Systemen anwendbar, in denen Nachrichteneinheiten, die Nachrichtenströmen unterschiedlicher Priorität zugehörig sind, gemeinsam über einen physikalischen oder einen logischen Übertragungskanal übertragen werden und dabei die dem jeweiligen Nachrichtenstrom zugehörigen Nachrichteneinheiten eine nachrichtenstrom-individuelle warteschlange durchlaufen. Als Beispiel neben einem zuvor erwähnten ATM-System sei hier ein nach dem Paketvermittlungs-Prinzip arbeitendes System genannt, in welchem Nachrichteneinheiten in Form von Datenpaketen übertragen werden.

## Patentansprüche

1. Verfahren zum Übertragen von Nachrichteneinheiten, die Nachrichtenströmen unterschiedlicher Priorität zugehörig sind, gemeinsam über einen Übertragungskanal, bei dem
- die dem jeweiligen Nachrichtenstrom zugehörigen Nachrichteneinheiten eine nachrichtenstrom-individuelle Warteschlange (Q1,...,Qm) durchlaufen,
- die Warteschlangen (Q1,...,Qm) entsprechend der Prioritäten der Nachrichtenströme, von denen sie jeweils durchlaufen werden, zu Warteschlangen-Gruppen (WG1,...,WGn) zusammengefaßt werden,
- die Warteschlangen-Gruppen (WG1,...,WGn) jeweils von einer gesonderten Warteschlangen-Steuereinrichtung (Scx, mit x=1,..., n) her derart gesteuert werden, daß jeweils zumindest zwei der Warteschlangen-Gruppen zu einer Partner-Warteschlangen-Gruppe (PWG1) zusammengefaßt sind, und
- die zu einer Partner-Warteschlangen-Gruppe (PWG1) gehörenden Warteschlangen-Gruppen (WG1,...,WGn) derart gesteuert werden, daß für den Fall, daß von einer der Warteschlangen-Gruppen momentan keine Nachrichteneinheit übertragen werden kann, von der betreffenden Warteschlangen-Gruppe die Übertragungsmöglichkeit an eine der verbleibenden Warteschlangen-Gruppen (WG1,...,WGn) der jeweiligen Partner-Warteschlangen-Gruppe (PWG1) übergeben wird.

2. Verfahren nach Anspruch 1,
**dadurch gekennzeichnet,**
**daß** die Nachrichteneinheiten nach einem asynchronen Transfermodus in Form von Nachrichtenzellen im Zuge von virtuellen Verbindungen übertragen werden, und
**daß** jeder der virtuellen Verbindungen eine der Warteschlangen (Q1,...,Qm) zugeordnet wird.

3. Verfahren nach Anspruch 1,
**dadurch gekennzeichnet,**
**daß** die Nachrichteneinheiten nach einem paketvermittelnden Prinzip in Form von Datenpaketen im Zuge von Nachrichtenströmen übertragen werden, und
**daß** jedem der Nachrichtenstöme eine der Warteschlangen (Q1,...,Qm) zugeordnet wird.

4. Verfahren nach einem der Ansprüche 1 bis 3
**dadurch gekennzeichnet,**
**daß** jeweils die Warteschlangen (Q1,...,Qm), die von Nachrichtenströmen gleicher Priorität durchlaufen werden, zu Warteschlangen-Gruppen (WG1,...,WGn) zusammengefaßt werden.

5. Schaltungsanordnung zum Übertragen von Nachrichteneinheiten, die Nachrichtenströmen unterschiedlicher Priorität zugehörig sind, gemeinsam über einen Übertragungskanal,
die derart ausgebildet und angeordnet ist,
- daß die dem jeweiligen Nachrichtenstrom zugehörigen Nachrichteneinheiten eine nachrichtenstrom-individuelle Warteschlange (Q1,...,Qm) durchlaufen,
- daß die Warteschlangen entsprechend der Prioritäten der Nachrichtenströme, von denen sie jeweils durchlaufen werden, zu Warteschlangen-Gruppen (WG1,...,WGn) zusammengefaßt sind, welche jeweils von einer gesonderten Warteschlangen-Steuereinrichtung (Scx, mit x=1, ...,n) her steuerbar sind,
- daß jeweils zumindest zwei der Warteschlangen-Gruppen zu einer Partner-Warteschlangen-Gruppe (PWG) zusammengefaßt sind, und
- daß die zu einer Partner-Warteschlangen-Gruppe (PWG1) gehörenden Warteschlangen-Gruppen (WG1,...,WGn) derart von einer Kontrolleinrichtung (KE) steuerbar sind, daß für den Fall, daß von einer der Warteschlangen-Gruppen momentan keine Nachrichteneinheit übertragen werden kann, von der betreffenden Warteschlangen-Gruppe die Übertragungsmöglichkeit an eine der verbleibenden Warteschlangen-Gruppen (WG1,...,WGn) der jeweiligen Partner-Warteschlangen-Gruppe (PWG1) übergebbar ist.

## Claims

1. A method for transmitting message units belonging to message streams of different priority jointly via a transmission channel, in which
- the message units belonging to the relevant message stream pass through a message-stream-specific queue (Q1,...,Qm),
- the queues (Q1,...,Qm) are combined into queue groups (WG1,...,WGn) according to the priorities of the message streams which pass through them in each case,
- the queue groups (WG1,...,WGn) are controlled in each case by a separate queue control device (Scx, where x=1,...,n) in such a way that at least two of the queue groups in each case are combined to form a partner queue group (PWG1), and
- the queue groups (WG1,...,WGn) belonging to a partner queue group (PWG1) are controlled in such a way that, if one of the queue groups is momentarily unable to send a message unit, the transmission possibility is transferred from the queue group concerned to one of the remaining queue groups (WG1,...,WGn) of the relevant partner queue group (PWG1).

2. The method as claimed in Claim 1,
**characterised in that**
the message units are transmitted according to an asynchronous transfer mode in the form of message cells belonging to virtual circuits, and
that one of the queues (Q1,...,Qm) is assigned to each of the virtual circuits.

3. The method as claimed in Claim 1,
**characterised in that**
the message units are transmitted according to a packet switching principle in the form of data packets belonging to message streams, and
that one of the queues (Q1,...,Qm) is assigned to each of the message streams.

4. The method as claimed in one of the Claims 1 to 3,
**characterised in that**
the queues (Q1,...,Qm) through which message streams of the same priority pass are combined to form queue groups (WG1,...WGn) in each case.

5. A circuit arrangement for transmitting message units belonging to message streams of different priority jointly via a transmission channel, said circuit arrangement being designed and arranged in such a way that
- the message units belonging to the relevant message stream pass through a message-stream-specific queue (Q1,...,Qm),
- the queues are combined, according to the priorities of the message streams which pass through them in each case, into queue groups (WG1,...,WGn) which can be controlled in each case by a separate queue control device (Scx, where x=1,...,n),
- at least two of the queue groups in each case are combined to form a partner queue group (PWG), and
- the queue groups (WG1,...,WGn) belonging to a partner queue group (PWG1) can be controlled by a control device (KE) in such a way that, if one of the queue groups is momentarily unable to send a message unit, the transmission possibility can be transferred from the queue group concerned to one of the remaining queue groups (WG1,...,WGn) of the relevant partner queue group (PWG1).

## Revendications

1. Procédé pour transmettre des unités de messages appartenant à des flux de messages de priorité différente, en commun par l'intermédiaire d'un canal de transmission, dans lequel
- les unités de messages appartenant au flux de messages respectif passent par une file d'attente (Q1, ... Qm) individuelle au flux de messages,
- les files d'attente (Q1, ..., Qm) sont groupées, selon les priorités des flux de messages par lesquels elles sont respectivement parcourues, en groupes de files d'attente (WG1, ..., WGn),
- les groupes de files d'attente (WG1, ..., WGn) sont respectivement commandés par un dispositif de commande de files d'attente séparé (Scx, où x = 1, ..., n), de telle manière qu'au moins deux des groupes de files d'attente sont respectivement groupés en un groupe de files d'attente partenaire (PWG1), et
- les groupes de files d'attente (WG1, ..., WGn) appartenant à un groupe de files d'attente partenaire (PWG1) sont commandés de telle manière que, au cas où aucune unité de messages ne peut être momentanément transmise par l'un des groupes de files d'attente, la possibilité de transmission est donnée par le groupe de files d'attente concerné à l'un des groupes de files d'attente restants (WG1, ..., WGn) du groupe de files d'attente partenaire (PWG1) respectif.

2. Procédé selon la revendication 1,
**caractérisé en ce que**
les unités de messages sont transmises selon un mode de transfert asynchrone sous forme de cellules de messages au cours de liaisons virtuelles, et
**en ce que** l'une des files d'attente (Q1, ..., Qm) est affectée à chacune des liaisons virtuelles.

3. Procédé selon la revendication 1,
**caractérisé en ce que** les unités de messages sont transmises selon un principe de commutation de paquets, sous forme de paquets de données au cours de flux de messages, et
**en ce que** l'une des files d'attente (Q1, ..., Qm) est affectée à chacun des flux de messages.

4. Procédé selon l'une quelconque des revendications 1 à 3,
**caractérisé en ce que**
les files d'attente respectives (Q1, ..., Qm), qui sont traversées par des flux de messages à priorité identique, sont groupées en groupes de files d'attente (WG1, ..., WGn).

5. Circuit pour transmettre des unités de messages appartenant à des flux de messages de priorité différente, en commun par l'intermédiaire d'un canal de transmission, ce circuit étant exécuté et disposé de telle manière
- que les unités de messages appartenant au flux de messages respectif passent par une file d'attente (Q1, ..., Qm) individuelle au flux de messages,
- que les files d'attente (Q1, ..., Qm) sont groupées, selon les priorités des flux de messages par lesquels elles sont respectivement parcourues, en groupes de files d'attente (WG1, ... ,WGn), lesquels sont respectivement commandables par un dispositif de commande de files d'attente séparé (Scx, où x = 1, ..., n),
- qu'au moins deux des groupes de files d'attente sont respectivement groupés en un groupe de files d'attente partenaire (PWG), et
- que les groupes de files d'attente (WG1, ..., WGn) appartenant à un groupe de files d'attente partenaire (PWG1) sont commandables par un dispositif de contrôle (KE), de telle manière que, au cas où aucune unité de messages ne peut être momentanément transmise par l'un des groupes de files d'attente, la possibilité de transmission peut être donnée par le groupe de files d'attente concerné à l'un des groupes de files d'attente restants (WG1, ..., WGn) du groupe de files d'attente partenaire (PWG1) respectif.
